# EUROPEAN PATENT APPLICATION

(11) **EP 4 582 209 A1**
(43) Date of publication of application: **09.07.2025**
(21) Application number: 24219571.7
(22) Date of filing: 12.12.2024
(51) Int. Cl.: B23K 9/095, B23K 9/10

(54) **SYSTEMS TO PROVIDE INTERFACES FOR CONTROL OF WELDING-TYPE SYSTEMS**

(30) Priority: 15.12.2023 US 202363610692 P; 06.12.2024 US 202418972194
(71) Applicant: Illinois Tool Works Inc., Glenview IL 60025 (US)
(72) Inventor: KNOENER, Craig Steven, Glenview, 60025 (US)
(74) Representative: HGF

(57) **Abstract**

Disclosed example welding-type power supplies include: power conversion circuitry configured to convert input power to welding-type output power; a user interface comprising one or more input devices; and control circuitry configured to: receive an input via the user interface, the input representing a value of a qualitative characteristic of a welding arc; based on the value of the qualitative characteristic, determine a plurality of welding parameters; display a representation of the welding arc via the user interface, the representation based on the value of the qualitative characteristic; and control the power conversion circuitry based on the plurality of welding parameters.

## Description

### RELATED APPLICATIONS

The present application claims the benefit of U. S. Provisional Patent Application Serial No. 63/610,692, filed December 15, 2023, entitled "SYSTEMS AND METHODS TO PROVIDE INTERFACES FOR CONTROL OF WELDING-TYPE SYSTEMS." The entirety of U.S. Provisional Patent Application Serial No. 63/610,692 is expressly incorporated herein by reference.

### FIELD OF THE DISCLOSURE

This disclosure relates generally to welding-type systems using repeated waveforms and, more particularly, to systems and methods to provide interfaces for control of welding-type systems.

### BACKGROUND

The user interface of a welding power supply controls welding parameters such as voltage and wire speed. More advanced user interfaces allow the operator to control more advanced parameters such as inductance. If the user interface does not allow the inductance to be adjusted, then the welding power supply determines the inductance without the guidance of the operator. Depending on various factors involved in a welding operation, such as wire type, wire diameter, material thickness, and travel speed, the operator must properly set the parameters (e.g., voltage, wire speed and inductance) to achieve a usable arc and metal transfer. Skilled operators are able to adjust the parameters via the controls to improve or optimize the arc and metal transfer.

### SUMMARY

Systems and methods to control systems and methods to provide interfaces for control of welding-type systems are disclosed, substantially as illustrated by and described in connection with at least one of the figures, as set forth more completely in the claims.

### BRIEF DESCRIPTION OF THE DRAWINGS

FIG. 1 is a schematic diagram of an example welding system including a welding-type power supply configured to output welding-type power, in accordance with aspects of this disclosure.
FIG. 2 illustrates an example user interface which may implement the user interface of FIG. 1 to allow selection of a welding-type process, a workpiece material, a wire type, and/or a shielding gas type, for use in determining a set of welding-type parameters.
FIG. 3 illustrates an example user interface which may implement the user interface of FIG. 1 to allow selection of a wire size, for use in determining a set of welding-type parameters.
FIG. 4 illustrates an example user interface which may implement the user interface of FIG. 1 to allow selection of a welding joint type, for use in determining a set of welding-type parameters.
FIG. 5 illustrates an example user interface which may implement the user interface of FIG. 1 to allow selection of a welding position, for use in determining a set of welding-type parameters.
FIG. 6 illustrates an example user interface which may implement the user interface of FIG. 1 to allow selection of a workpiece thickness, for use in determining a set of welding-type parameters.
FIGS. 7A-7D illustrate an example user interface which may implement the user interface of FIG. 1 to allow selection of a value of a qualitative characteristic, and to display a graphic representation of a welding arc based on the selected qualitative characteristics and/or the resulting welding-type parameters.
FIG. 7E illustrates the example user interface of FIG. 7A, and further displaying values of welding-type parameters determined based on the qualitative characteristics.
FIG. 8 is a flowchart representative of example machine readable instructions which may be executed by the example processor of FIG. 1 to configure an interface and control the welding-type power supply of FIG. 1.

The figures are not to scale. Where appropriate, the same or similar reference numerals are used in the figures to refer to similar or identical elements.

### DETAILED DESCRIPTION

While conventional welding equipment allows an operator to adjust the welding parameters that affect the operation of the welding equipment, many operators do not think about welding operations in terms of the welding parameters. For example, instead of considering the preferred arc characteristics as a function of the weld voltage, wire feed speed, and inductance, many operators are looking to adjust the heat input to the weld and/or the shape of the welding arc or welding bead. To obtain baseline parameters for use in obtaining the desired characteristics, operators may set initial welding parameters by referencing a parameter chart and/or using parameter recommendation features such as Auto-Set^{®} provided on equipment manufactured by Miller Electric Manufacturing LLC. However, many operators do not understand how to modify the parameters from the recommended parameters to obtain the desired characteristics.

Disclosed example welding-type systems, interfaces, and methods substantially improve the usability of welding equipment by providing the welding operator with the ability to manipulate qualitative characteristics of the welding-type operation in terms that are easily understood by the operator. Example systems, interfaces, and methods also provide graphical representations of the changes to the welding arc, welding bead, and/or workpiece based on changes to the qualitative characteristics. Disclosed example welding-type systems, interfaces, and methods convert the qualitative characteristics to the welding-type parameters, which may be based on synergic relationships between parameters that are related to the qualitative characteristic being adjusted by the operator. As a result, disclosed example systems, interfaces, and methods reduce the time necessary for welding operators to obtain the desired welding arc characteristics and/or desired weld bead.

Some example systems, interfaces, and methods provide training opportunities to the weld operator by displaying the values of the welding-type parameters being adjusted using the qualitative characteristics. As the operator changes the desired characteristic, the changes to the welding arc and/or the welding bead are shown (e.g., in real-time) in conjunction with the changes to the corresponding welding-type parameters that are changed in response to the adjustments to the characteristic.

As used herein, "descriptive characteristics" or "qualitative characteristics" are distinguished from quantitative parameters such as voltage, current, wire feed speed, inductance, or power. Example "descriptive characteristics" or "qualitative characteristics" include a descriptive heat input (e.g., hot vs. cold), arc length (long vs. short), arc width (wide vs. narrow), bead width (wide vs. narrow), arc stiffness (e.g., soft arc vs. stiff arc), and/or other characteristics, many of which are directly observable by the weld operator.

As used herein, the term "real-time" means occurring immediately, while allowing for processing time, to create the impression of immediacy to a user.

As used herein, "power conversion circuitry" and/or "power conversion circuits" refer to circuitry and/or electrical components that convert electrical power from one or more first forms (e.g., power output by a generator) to one or more second forms having any combination of voltage, current, frequency, and/or response characteristics. The power conversion circuitry may include power limiting circuitry, output selection circuitry, measurement and/or control circuitry, and/or any other circuits to provide appropriate features.

As used herein, the terms "first" and "second" may be used to enumerate different components or elements of the same type, and do not necessarily imply any particular order. For example, while in some examples a first time occurs prior to a second time within a time period, the terms "first time" and "second time" do not imply any specific order in which the first or second times occur relative to the other within the time period.

The term "welding-type system," as used herein, includes any device capable of supplying power suitable for welding, plasma cutting, induction heating, Carbon Arc Cutting-Air (e.g., CAC-A) and/or hot wire welding/preheating (including laser welding and laser cladding), including inverters, converters, choppers, resonant power supplies, quasi-resonant power supplies, etc., as well as control circuitry and other ancillary circuitry associated therewith.

As used herein, the term "welding-type power" refers to power suitable for welding, plasma cutting, induction heating, CAC-A and/or hot wire welding/preheating (including laser welding and laser cladding). As used herein, the term "welding-type power supply" and/or "power supply" refers to any device capable of, when power is applied thereto, supplying welding, plasma cutting, induction heating, CAC-A and/or hot wire welding/preheating (including laser welding and laser cladding) power, including but not limited to inverters, converters, resonant power supplies, quasi-resonant power supplies, and the like, as well as control circuitry and other ancillary circuitry associated therewith.

As used herein, a "circuit," or "circuitry," includes any analog and/or digital components, power and/or control elements, such as a microprocessor, digital signal processor (DSP), software, and the like, discrete and/or integrated components, or portions and/or combinations thereof.

The terms "control circuit," "control circuitry," and/or "controller," as used herein, may include digital and/or analog circuitry, discrete and/or integrated circuitry, microprocessors, digital signal processors (DSPs), and/or other logic circuitry, and/or associated software, hardware, and/or firmware. Control circuits or control circuitry may be located on one or more circuit boards that form part or all of a controller, and are used to control a welding process, a device such as a power source or wire feeder, and/or any other type of welding-related system.

As used herein, the term "memory" includes volatile and non-volatile memory devices and/or other storage device.

As used herein, the term "torch," "welding torch," "welding tool" or "welding-type tool" refers to a device configured to be manipulated to perform a welding-related task, and can include a hand-held welding torch, robotic welding torch, gun, gouging tool, cutting tool, or other device used to create the welding arc.

As used herein, the term "welding mode," "welding process," "welding-type process" or "welding operation" refers to the type of process or output used, such as current-controlled (CC), voltage-controlled (CV), pulsed, gas metal arc welding (GMAW), flux-cored arc welding (FCAW), gas tungsten arc welding (GTAW, e.g., TIG), shielded metal arc welding (SMAW), spray, short circuit, CAC-A, gouging process, cutting process, and/or any other type of welding process.

Disclosed example welding-type power supplies include: power conversion circuitry configured to convert input power to welding-type output power; a user interface comprising one or more input devices; and control circuitry configured to: receive an input via the user interface, the input representing a value of a qualitative characteristic of a welding arc; based on the value of the qualitative characteristic, determine a plurality of welding parameters; display a representation of the welding arc via the user interface, the representation based on the value of the qualitative characteristic; and control the power conversion circuitry based on the plurality of welding parameters.

In some example welding-type power supplies, the qualitative characteristic is at least one of a heat input of the welding arc, a width of the welding arc, a leg length of a resulting bead, a penetration profile, or a resulting bead shape. In some example welding-type power supplies, the control circuitry is configured to receive inputs representing values for both the heat input and the width via the user interface, and determine the plurality of welding parameters based on the received inputs representing the values of the heat input and the width. In some example welding-type power supplies, the plurality of welding parameters include two or more of: voltage, current, wire feed speed, inductance, slope, AC balance, AC frequency, pulse frequency, pulse background voltage, pulse background current, pulse peak voltage, or pulse peak current.

In some example welding-type power supplies, the control circuitry is configured to receive inputs representative of physical characteristics of a welding operation, and determine the plurality of welding parameters based on the inputs representative of the physical characteristics. In some example welding-type power supplies, the physical characteristics include one or more of a weld process type, a wire type, a shielding gas type, a wire size, a workpiece thickness, a weld joint type, or a weld joint position. In some example welding-type power supplies, the representation of the welding arc is a graphic illustrating one or more of: an arc length, a bead concavity, a bead width, a throat thickness, a leg height, a penetration depth, or an electrode extension.

In some example welding-type power supplies, the control circuitry is configured to update the representation of the welding arc in real time in response to changes in the value of the qualitative characteristic. In some example welding-type power supplies, the control circuitry is configured to determine the welding parameters in response to a confirmation of the value of the qualitative characteristic via the user interface. In some example welding-type power supplies, the control circuitry is configured to display the determined welding parameters via the user interface with the representation of the welding arc, and update the welding parameters in real time in response to the changes in the value of the qualitative characteristic via the user interface.

Disclosed example welding-type user interfaces include: one or more input devices; one or more output devices; and control circuitry configured to: receive an input via the one or more input devices, the input representing a value of a qualitative characteristic of a welding arc; based on the value of the qualitative characteristic, determine a plurality of welding parameters; display a representation of the welding arc via the one or more output devices, the representation based on the value of the qualitative characteristic; and communicate the plurality of welding parameters to a welding-type power supply.

Some disclosed example welding-type power supplies include: power conversion circuitry configured to convert input power to welding-type output power; a user interface comprising one or more input devices; and control circuitry configured to: in response to receiving a first input modifying a first characteristic via the user interface, synergically modify a first subset of a plurality of welding-type parameters; in response to receiving a second input modifying a second characteristic via the user interface, synergically modify a second subset of the plurality of welding-type parameters; display a representation of a welding arc via the user interface, the representation based on the values of the first characteristic and the second characteristic or based on values of the plurality of welding-type parameters; and control the power conversion circuitry based on the plurality of welding parameters.

In some example welding-type power supplies, the first characteristic includes a first one of a heat input of the welding arc, a width of the welding arc, a leg length of a resulting bead, a penetration profile, or a resulting bead shape. In some example welding-type power supplies, the second characteristic includes a second one of the heat input of the welding arc, the width of the welding arc, the leg length of a resulting bead, the penetration profile, or the resulting bead shape.

In some example welding-type power supplies, the first subset of the plurality of welding-type parameters includes two or more of: voltage, current, wire feed speed, inductance, slope, AC balance, AC frequency, pulse frequency, pulse background voltage, pulse background current, pulse peak voltage, or pulse peak current. In some example welding-type power supplies, the second subset of the plurality of welding-type parameters comprises two or more of: voltage, current, wire feed speed, inductance, slope, AC balance, AC frequency, pulse frequency, pulse background voltage, pulse background current, pulse peak voltage, or pulse peak current, wherein the second subset has at least one welding-type parameter that is different than the first subset.

In some example welding-type power supplies, the first subset and the second subset have at least one overlapping welding-type parameter. the control circuitry is configured to receive inputs representative of physical characteristics of a welding operation, and modify the first subset of the plurality of welding-type parameters based on the inputs representative of the physical characteristics. In some example welding-type power supplies, the physical characteristics include one or more of a weld process type, a wire type, a shielding gas type, a wire size, a workpiece thickness, a weld joint type, or a weld joint position.

In some example welding-type power supplies, the representation of the welding arc is a graphic illustrating one or more of: an arc length, a bead concavity, a bead width, a throat thickness, a leg height, a penetration depth, or an electrode extension. In some example welding-type power supplies, the control circuitry is configured to synergically modify the first subset of the plurality of welding-type parameters by modifying the first subset of the plurality of welding-type parameters based on a predetermined relationship between the welding-type parameters in the first subset and based on a value of the first characteristic.

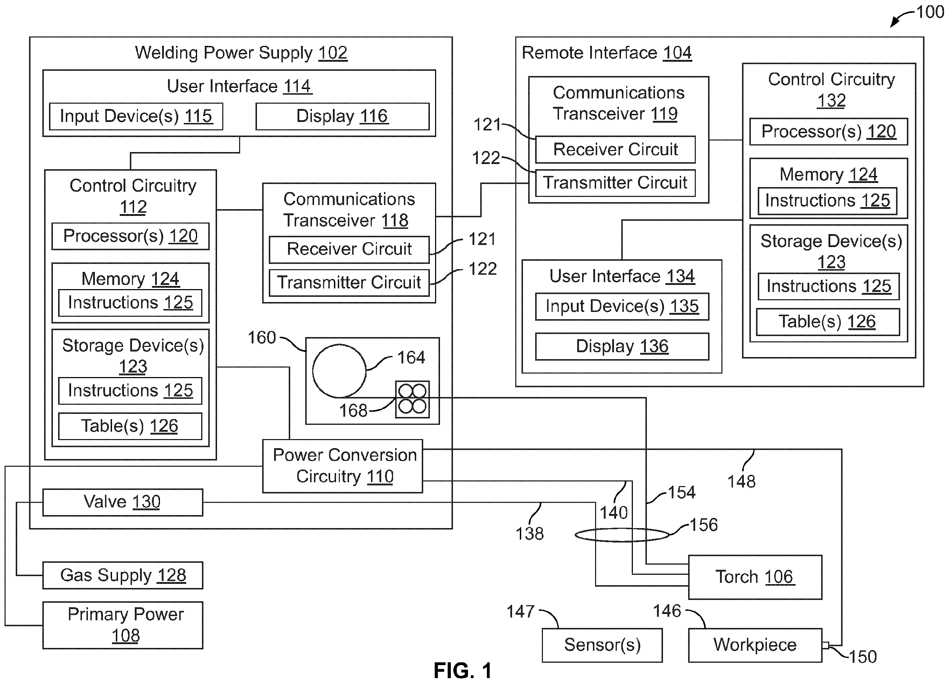

Turning now to the drawings, FIG. 1 is a block diagram of an example welding system 100 having a welding-type power supply 102, a remote interface 104, and a welding torch 106. The welding system 100 powers, controls, and/or supplies consumables to a welding application. In the example of FIG. 1, the power supply 102 directly supplies welding-type output power to the welding torch 106. The welding torch 106 may be configured for any welding-type process involving DC welding-type current, pulsed DC welding-type current waveforms, and/or AC waveforms. Example DC pulse waveforms that may be output by the power supply 102 have a peak phase at a peak current and a background phase at a background current, and one pulse cycle includes one peak phase and one background phase.

The power supply 102 receives primary power 108 (e.g., from the AC power grid, an engine/generator set, a battery, or other energy generating or storage devices, or a combination thereof), conditions the primary power, and provides an output power to one or more welding devices in accordance with demands of the system 100. The primary power 108 may be supplied from an offsite location (e.g., the primary power may originate from the power grid). The power supply 102 includes power conversion circuitry 110, which may include transformers, rectifiers, switches, and so forth, capable of converting the AC input power to AC and/or DC output power as dictated by the demands of the system 100 (e.g., particular welding processes and regimes). The power conversion circuitry 110 converts input power (e.g., the primary power 108) to welding-type power based on welding parameters and outputs the welding-type power via a weld circuit.

The power supply 102 includes control circuitry 112 to control the operation of the power supply 102. The power supply 102 also includes a user interface 114. The control circuitry 112 receives input from the user interface 114, through which a user may choose a process and/or input desired parameters. As disclosed in more detail below, the example user interface 114 enables a user to select values for qualitative characteristics of a welding arc and/or a welding bead, which are then converted into welding parameters by the control circuitry 112 for control of the power conversion circuitry 110. The qualitative characteristics presented by the user interface may be selected to be descriptive characteristics that are more easily understood by an operator than conventional welding-type parameters. Additionally, the example user interface 114 displays graphical representations of the welding arc, the welding bead, the workpiece, and/or the welding electrode, which are responsive to user changes to the qualitative characteristic inputs to display effects of the changes to the operator.

The user interface 114 may receive inputs using one or more input devices 115, such as via a keypad, keyboard, physical buttons, switches, knobs, a mouse, a keyboard, a keypad, a touch screen (e.g., software buttons), a voice activation system, a wireless device, etc. Furthermore, the control circuitry 112 controls operating parameters based on input by the user as well as based on other current operating parameters. Specifically, the user interface 114 may include a display 116 for presenting, showing, or indicating, information to an operator.

Similarly, the example remote interface 104 may include a user interface 134 having one or more input device(s) 135 and a display 136. The user interface 134, the input device(s) 135, and/or the display 136 may be similar, identical, or different than the user interface 114, the input device(s) 115, and/or the display 116. The example remote interface 104 may be, for example, a separate welding interface, a computing device (e.g., a server, a desktop computer, a laptop computer, etc.), a tablet computer, a smartphone or other portable computing device, a robot control pendant, and/or any other type of interface device. In some examples, the remote interface 104 may permit determination of parameters as disclosed herein for communication, copying, and/or any other transfer to the power supply 102.

The control circuitry 112 may also include interface circuitry for communicating data to other devices in the system 100, such as the remote interface 104. For example, in some situations, the power supply 102 wirelessly communicates with the remote interface 104. Further, in some situations, the power supply 102 communicates with the remote interface 104 using a wired connection, such as by using a network interface controller (NIC) to communicate data via a network (e.g., ETHERNET, 10baseT, 10base100, etc.), and/or. In some examples, the control circuitry 112 communicates with the remote interface 104 via the weld circuit.

The control circuitry 112 includes at least one controller or processor 120 that controls the operations of the power supply 102. The control circuitry 112 receives and processes multiple inputs associated with the performance and demands of the system 100. The processor 120 may include one or more microprocessors, such as one or more "general-purpose" microprocessors, one or more special-purpose microprocessors and/or ASICS, and/or any other type of processing device. For example, the processor 120 may include one or more digital signal processors (DSPs).

The example control circuitry 112 includes one or more storage device(s) 123 and one or more memory device(s) 124. The storage device(s) 123 (e.g., nonvolatile storage) may include ROM, flash memory, a hard drive, and/or any other suitable optical, magnetic, and/or solid-state storage medium, and/or a combination thereof. The storage device 123 stores data (e.g., data corresponding to a welding application), instructions (e.g., software or firmware to perform welding processes), and/or any other appropriate data. Examples of stored data for a welding application include predetermined relationships between the qualitative characteristics and combinations of welding-type parameters, such as one or more look up tables, as described in more detail below.

The memory device 124 may include a volatile memory, such as random access memory (RAM), and/or a nonvolatile memory, such as read-only memory (ROM). The memory device 124 and/or the storage device(s) 123 may store a variety of information and may be used for various purposes. For example, the memory device 124 and/or the storage device(s) 123 may store processor executable instructions 125 (e.g., firmware or software) for the processor 120 to execute. In addition, one or more control regimes for various welding processes, along with associated settings and parameters, may be stored in the storage device 123 and/or memory device 124.

In some examples, a gas supply 128 provides shielding gases, such as argon, helium, carbon dioxide, and so forth, depending upon the welding application. The shielding gas flows to a valve 130, which controls the flow of gas, and if desired, may be selected to allow for modulating or regulating the amount of gas supplied to a welding application. The valve 130 may be opened, closed, or otherwise operated by the control circuitry 112 to enable, inhibit, or control gas flow (e.g., shielding gas) through the valve 130. Shielding gas exits the valve 130 and flows through a gas line 138 (which in some implementations may be packaged with the welding power output) to the welding torch 106, which provides the shielding gas to the welding application. In some examples, the welding system 100 does not include the gas supply 128, the valve 130, and/or the gas line 138.

In the example of FIG. 1, the power supply 102 includes a communications transceiver 118, and the remote interface 104 includes a communications transceiver 119. The communications transceivers 118, 119 each include a corresponding receiver circuit 121 and a corresponding transmitter circuit 122. The example communications transceivers 118, 119 enable the remote interface 104 to transmit commands to the power supply 102 and/or receive information from the power supply 102. Example commands may include commands to set parameters and/or otherwise configure the power supply 102. The remote interface 104 may receive information about the configuration of the power supply 102.

The remote interface 104 further includes control circuitry 132, which may include one or more processor(s) 120, one or more storage device(s) 123, and/or memory 124, and/or may store and execute machine readable instructions 125. The control circuitry 132, the processor(s) 120, the storage device(s) 123, and/or the memory 124 may be similar, identical, or different than the control circuitry 112, the processor(s) 120, the storage device(s) 123, and/or the memory 124 of the power supply 102.

The example power supply 102 includes a wire feed assembly 160 that supplies electrode wire 154 to the welding torch 106 for wire-fed welding operations. The wire feed assembly 160 includes elements such as a wire spool 164 and a wire feed drive configured to power drive rolls 168. The wire feed assembly 160 feeds the electrode wire 154 to the welding torch 106 along a torch cable 156.

The welding torch 106 delivers the welding power and/or shielding gas for a welding application. The welding torch 106 is used to establish a welding arc between the welding torch 106 and a workpiece 146. A welding conductor 140 couples the torch 106 to the power conversion circuitry 110 to conduct current to the torch 106. A work cable 148 couples the workpiece 146 to the power supply 102 (e.g., to the power conversion circuitry 110) to provide a return path for the weld current (e.g., as part of the weld circuit). The example work cable 148 is attachable and/or detachable from the power supply 102 for ease of replacement of the work cable 148. The work cable 148 may be terminated with a clamp 150 (or another power connecting device), which couples the power supply 102 to the workpiece 146.

The torch cable 156 may combine delivery of the electrode wire 154, the welding conductor 140, and the gas line 138 into a single cable or jacket.

In some examples, one or more sensors 147 are included with or connected to the welding torch 106 to monitor one or more welding parameters (e.g., power, voltage, current, wire feed speed, inductance, impedance, etc.) to inform the control circuitry 132 and/or 112 during the welding process.

To aid a weld operator in configuring the welding-type power supply 102 appropriately (e.g., welding parameters), the example storage device(s) 123 may store tables 126 (e.g., lookup tables) or other data representative of relationships between qualitative characteristics (e.g., heat input of the welding arc, width or spread of the welding arc, a leg length of a resulting bead, a penetration profile, bead shape, etc.) and welding parameters (e.g., voltage, current, wire feed speed, inductance, slope, AC balance, AC frequency, pulse frequency, pulse background voltage, pulse background current, pulse peak voltage, or pulse peak current.). The tables 126 may map relationships between ranges of values of the qualitative characteristics and ranges of values for the welding parameters, for both individual qualitative characteristics and/or combinations of qualitative characteristics. In some examples, the tables 126 may store further relationships and/or data relating qualitative characteristics and/or welding parameters to robotic control parameters, such as travel speed, work angle, and/or travel angle. The example tables 126 may be populated based on empirical testing using different combinations of welding parameters. The relationships may define ranges of values of the qualitative characteristics such that the welding parameters calculated from the qualitative characteristics are held to an optimum set or range of welding parameters, a preferred range of welding parameters, or a weldable range of welding parameters (e.g., avoiding unweldable conditions).

Using the tables 126 and/or other stored relationship(s), the example control circuitry 112 responds to changes in qualitative characteristics via the user interface 114 by determining a synergic modification to a subset of two or more of the welding-type parameters. The control circuitry 112 may further use the tables 126 and/or other stored relationship(s) to determine welding-type parameters based on the qualitative characteristics. The operator may adjust the qualitative characteristics via the user interface 114, 134 until the operator identifies a desired combination of arc and/or bead characteristics, from which the control circuitry 112 determines the corresponding welding-type parameters without further calculation or intervention by the operator. When the operator performs welding, the control circuitry 112 controls the power conversion circuitry 110 based on the determined welding-type parameters.

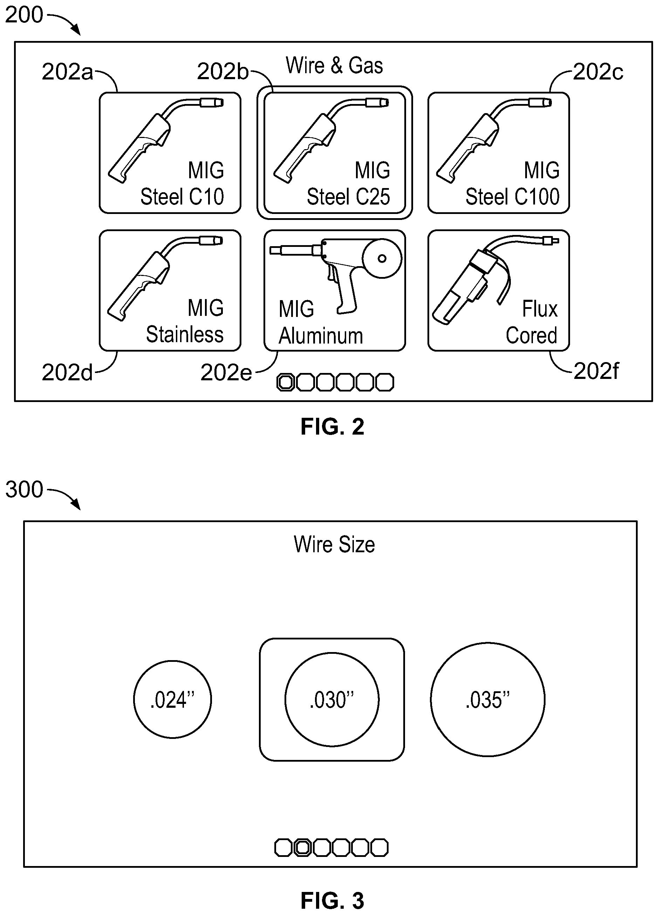

The example user interface 114, 134 also receives physical characteristics of the welding operation from the operator. FIGS. 2-6 illustrate example user interface screens 200-600 which may be displayed by the user interface 114, 134 (e.g., sequentially) to allow the operator to input the physical characteristics.

FIG. 2 illustrates an example user interface 200 which may implement the user interface 114, 134 of FIG. 1 to allow selection of a welding-type process, a workpiece material, a wire type, and/or a shielding gas type, for use in determining a set of welding-type parameters. In the example interface 200, combinations 202a-202f of welding process (e.g., MIG or GMAW, FCAW), workpiece material (e.g., steel, stainless steel, aluminum, flux-cored), wire type (e.g., steel, stainless steel, aluminum), and shielding gas type (e.g., C10, C25, C100, argon, none) are displayed for quick selection by the operator. The operator may select one of the combinations 202a-202f (e.g., via the input device(s) 115, 135) to input the welding process, workpiece material, wire type, and shielding gas type. In other examples, the user interface 200 may be split into multiple interfaces to allow for individual selection of the welding process, workpiece material, wire type, and shielding gas type, and/or combinations of fewer of the welding process, workpiece material, wire type, and shielding gas type than the example combinations of FIG. 2.

FIG. 3 illustrates an example user interface 300 which may implement the user interface 114, 134 of FIG. 1 to allow selection of a wire size, for use in determining a set of welding-type parameters. For the selected wire type (e.g., selected via the user interface 200 of FIG. 2), the interface 300 displays the wire diameters that are selectable. The operator may then select the wire diameter from the displayed options (e.g., via the input device(s) 115, 135).

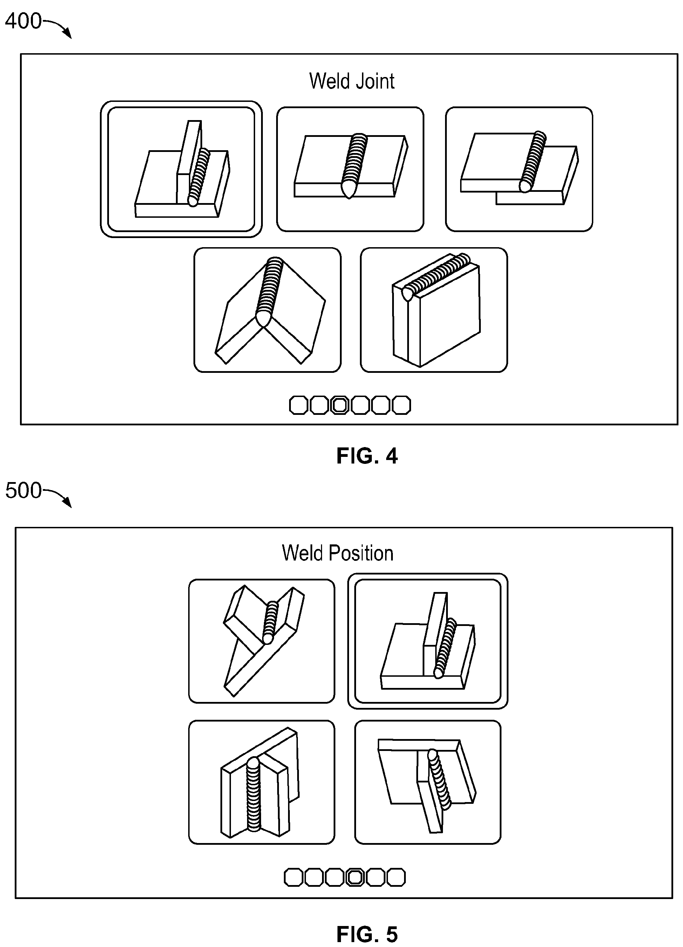

FIG. 4 illustrates an example user interface 400 which may implement the user interface 114, 134 of FIG. 1 to allow selection of a welding joint type, for use in determining a set of welding-type parameters. The j oint type selection may occur, for example, after selection of the wire size via the user interface 300. The example user interface 400 allows selections of joints such as T-j oints, butt joints, lap joints, corner joints, edge joints, and/or any other types of joints. The operator may then select the joint type from the displayed options (e.g., via the input device(s) 115, 135).

FIG. 5 illustrates an example user interface 500 which may implement the user interface 114, 134 of FIG. 1 to allow selection of a welding position, for use in determining a set of welding-type parameters. The j oint position selection may occur, for example, after selection of the joint type via the user interface 400. The example user interface 500 displays, and allows selection of, joint positions based on the selected joint type. The positions may include flat (1F), horizontal (2F), vertical (3F), overhead (4F), and/or any other joint positions.

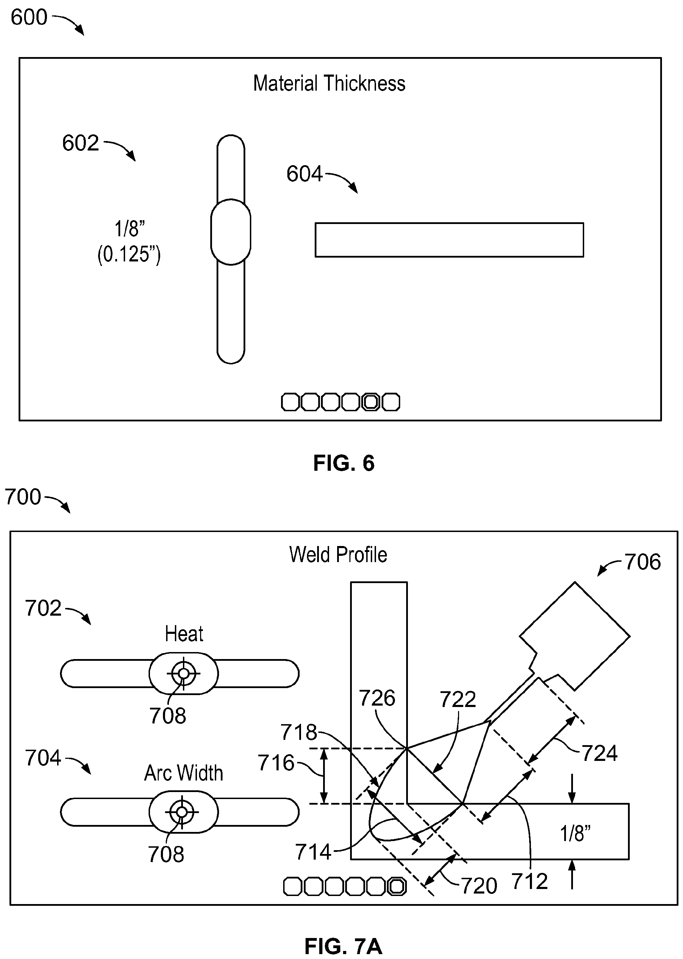

FIG. 6 illustrates an example user interface 600 which may implement the user interface of FIG. 1 to allow selection of a workpiece thickness, for use in determining a set of welding-type parameters. The material thickness selection may occur, for example, after selection of the joint position via the user interface 500. In the example of FIG. 6, the interface 600 includes a sliding selector 602 and a graphical indicator 604 representative of the selected material thickness. The operator may move the sliding selector 602 up and down to increase or decrease the material thickness selection. In some examples, the material thicknesses which are selectable via the sliding selector 602 are dependent on the previously selected characteristics and/or the capabilities of the welding-type power supply 102.

After selection of the physical characteristics, the user interface 114, 134 may display a parameter selection, in the form of qualitative characteristics of the arc instead of using conventional welding parameters such as voltage and wire feed speed. FIGS. 7A-7D illustrate an example user interface 700 which may implement the user interface 114, 134 of FIG. 1 to allow selection of values of qualitative characteristics via selectors 702, 704, and to display a graphic representation 706 of a welding arc based on the selected qualitative characteristics and/or the resulting welding-type parameters.

The example selectors 702, 704 for the qualitative characteristics allow the operator to adjust values which may be more intuitive to the operator, such as "heat" (or "heat input") and "arc width" (or "spread," or "bead width"). The example interface 700 includes indicators 708, 710 to indicate the recommended or preferred values for the selectors 702, 704, which are based on the selected physical characteristics of the welding-type operation. In some examples, the control circuitry 112 sets the initial values of the selectors 702, 704 equal to the indicators 708, 710 when the interface 700 is displayed.

The example indicators 708, 710 are reticles that have fixed positions along a range of the selector 702, 704.

FIG. 7A illustrates the user interface 700 having the selectors 702, 704 set to be equal to the values shown by the indicators 708, 710. As shown in FIG. 7A, the graphic representation 706 includes representations of the welding arc length 712, a welding arc width 714 (or bead width), a bead leg length 716, a penetration profile 718 (e.g., penetration depth 720, penetration shape), a bead concavity 722, an electrode extension 724, and a throat thickness 726. In the illustrated example, the graphical representation 706 shows a relatively flat bead concavity 722, and nominal values for the welding arc length 712, the welding arc width 714, the bead leg length 716, the penetration profile 718 (e.g., penetration depth 720 and penetration shape), the electrode extension 724, and the throat thickness 726.

As an example, for GMAW or FCAW welding processes, the control circuitry 112 may relate the "heat input" characteristic to the voltage parameter and the wire feed speed parameter. In response to changes to the selector 702 for heat input, the control circuitry 112 synergically adjusts the values of the voltage and the wire feed speed parameters. For example, the control circuitry 112 may use the input value of the selector 702 as a lookup value for a lookup table 126 stored in the storage device(s) 123 to determine the corresponding voltage and wire feed speed values.

The graphic representation 706 may be based on the selected weld process type (e.g., wire fed process, stick electrode process, TIG process, etc.), the selected joint type, the selected joint position, and/or any other physical characteristics.

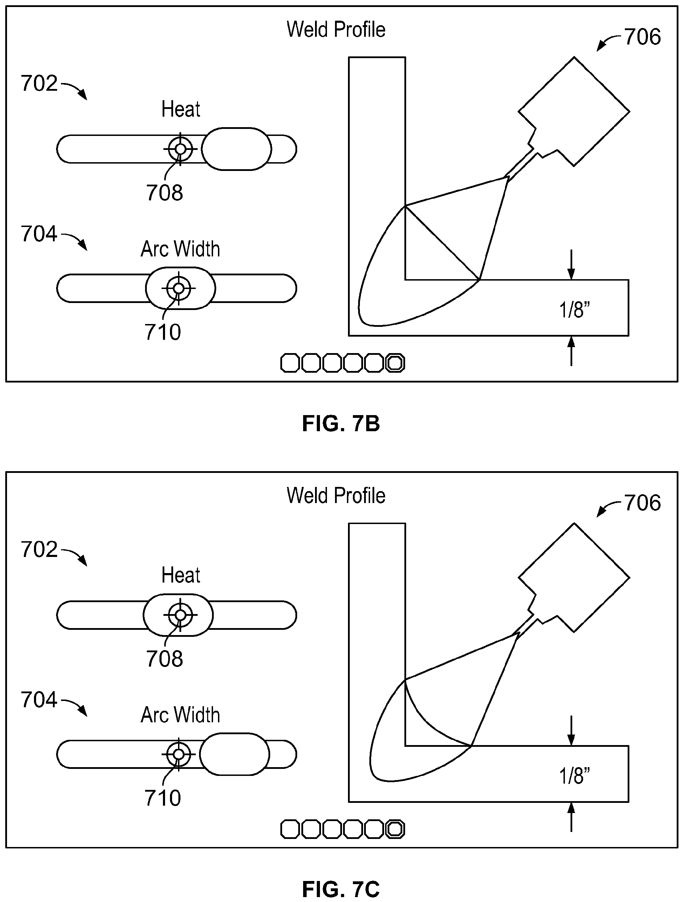

FIG. 7B illustrates the user interface 700 in which the selector 702 is adjusted to increase the heat input characteristic relative to the indicator 708. In response, the control circuitry 112 synergically adjusts the corresponding subset of parameters (e.g., increases voltage and wire feed speed). As a result, the control circuitry 112 adjusts the graphic representation 706 to increase the arc length 712, increase the arc width 714, increase the bead leg length 716, increase the penetration depth 720, and reduce the electrode extension 724) relative to the graphical representation of FIG. 7A.

As another example, the control circuitry 112 may relate the "arc width" characteristic to the voltage parameter and the inductance parameter. In response to changes to the selector 704 for arc width, the control circuitry 112 synergically adjusts the values of the voltage and the inductance parameters. For example, the control circuitry 112 may use the input value of the selector 704 as a lookup value for a lookup table 126 stored in the storage device(s) 123 to determine the corresponding voltage and inductance values.

FIG. 7C illustrates the user interface 700 in which the selector 704 is adjusted to increase the arc width characteristic relative to the indicator 710. In response, the control circuitry 112 synergically adjusts the corresponding subset of parameters (e.g., increases voltage and inductance). As a result, the control circuitry 112 adjusts the graphic representation 706 to increase the arc length 712 and change the bead concavity 722. However, the throat thickness 726, the bead leg length 716, and the penetration depth 720 are not significantly changed relative to the graphical representation of FIG. 7A.

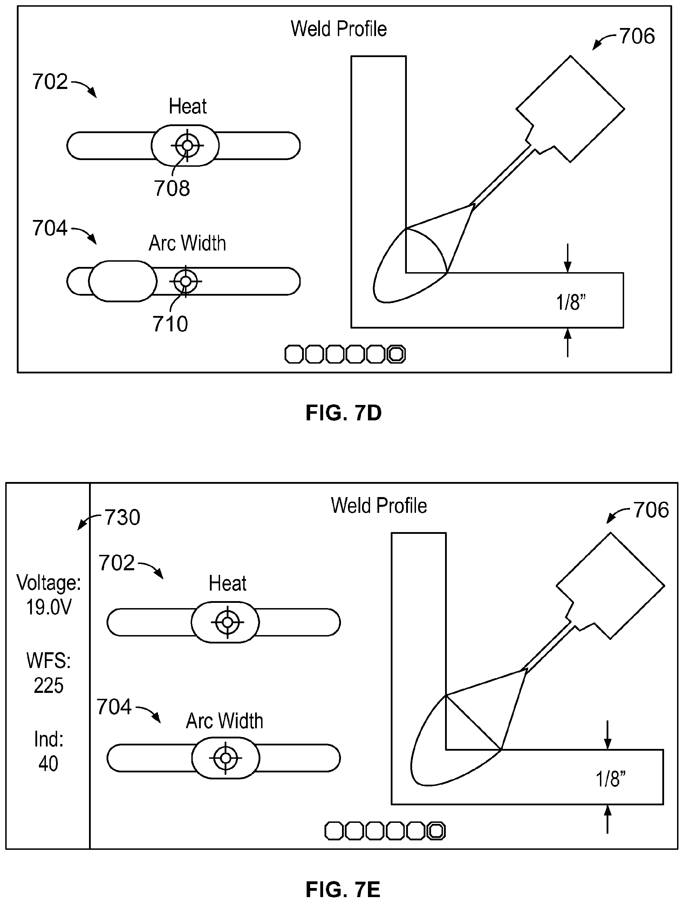

Conversely, FIG. 7D illustrates the user interface 700 in which the selector 704 is adjusted to decrease the arc width characteristic relative to the indicator 710. In response, the control circuitry 112 synergically adjusts the corresponding subset of parameters (e.g., decreases voltage and inductance). As a result, the control circuitry 112 adjusts the graphic representation 706 to decrease the arc length 712 and change the bead concavity 722. However, the throat thickness 726, the bead leg length 716, and the penetration depth 720 are not significantly changed relative to the graphical representation of FIG. 7A.

As used herein, "synergic" control or modification involves changing two or more values in accordance with a predetermined relationship. In some examples, a control variable (e.g., the value of the qualitative characteristic) can be used to determine the resulting values of two or more of the welding-type parameters according to the predetermined relationship. The predetermined relationship between the values may be empirically determined (e.g., by a weld engineer, by the manufacturer of the welding-type equipment, etc.) and stored in the storage devices 123 (e.g., in the tables 126). A welding-type parameter may have one or more predetermined relationships with multiple other welding-type parameters. For example, the voltage parameter may have a first synergic relationship with the wire feed speed parameter based to achieve a desired heat input, and may have a second synergic relationship with the inductance parameter to achieve a desired arc width. Other example synergic relationships between welding-type parameters that may be implemented by the control circuitry include workpiece cleaning effects, gap bridging or closure effects, travel speed adjustments, and/or any other desired synergic relationships or qualitative controls that may be desired by the operator.

The control circuitry 112 may calculate and adjust the graphical representation 706 in real time in response to operator changes to the selectors 702, 704. In other examples, the control circuitry 112 calculates and adjusts the graphical representation 706 in response to a confirmation of the value of the qualitative characteristic(s) (selected via the selectors 702, 704) via the user interface 700. An example selection may involve a release of the selectors 702, 704 by the operator (e.g., breaking contact with a touchscreen input), affirmative selection of an "Accept" or "OK" button, and/or a different input to shift focus from the selectors 702, 704.

Additional or alternative qualitative characteristics may be used, or different names may be used to describe the qualitative characteristics. The control circuitry 112 relates the qualitative characteristics to subsets of welding-type parameters, such that adjustments to the value of the qualitative characteristics causes the control circuitry 112 to adjust the welding-type parameters in the corresponding subset.

FIG. 7E illustrates the example user interface 700 of FIG. 7A, and further displaying values of welding-type parameters 730 determined based on the qualitative characteristics input via the selectors 702, 704. In the example of FIG. 7E, the user interface 700 displays calculated values of voltage, wire feed speed, and inductance. In addition to real-time updates to the graphical representation 706 in response to changes in the selectors 702, 704, the control circuitry 112 may determine and display real-time updates to the parameters 730 in the interface 700. The real-time updates to the parameters 730 may help the operator learn the relationships between the parameters (e.g., individual parameters and/or combinations of parameters).

While the example selectors 702, 704 on the interface 700 are virtual slider bars implemented on the user interface 700 (e.g., a touch screen), other types of physical and/or virtual input devices may be used. Virtual input devices may include software-implemented input devices shown on a display screen (e.g., touchscreen), such as virtual knobs or dials. The qualitative characteristics may be presented on the display using verbiage, graphics (e.g., to graphically illustrate the qualitative characteristics of the welding arc, welding bead, robotic characteristics, etc.), and/or any other method.

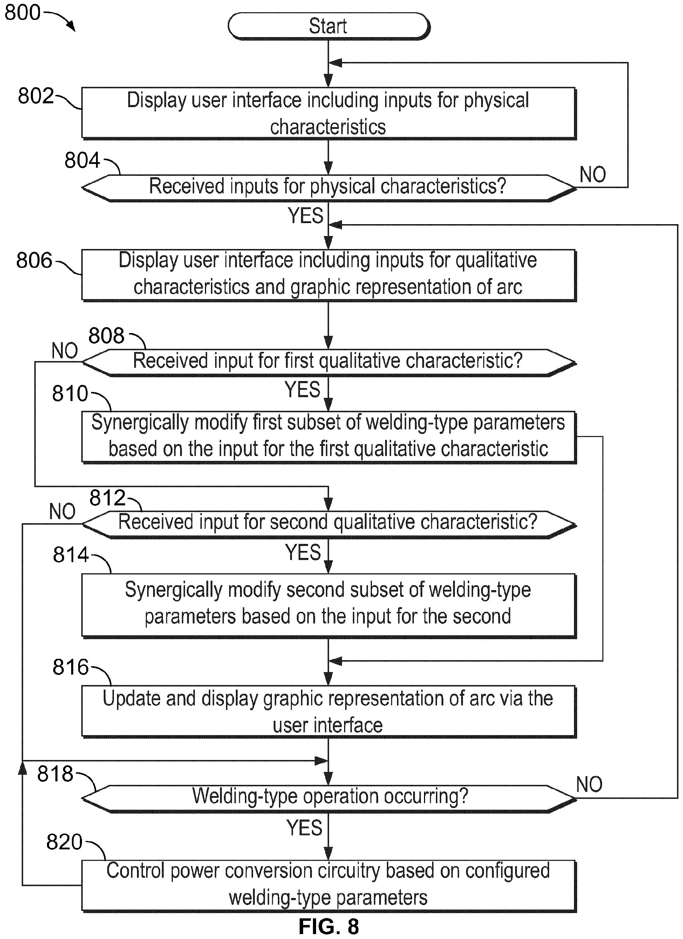

FIG. 8 is a flowchart representative of example machine readable instructions 800 which may be executed by the example control circuitry 112, 132 (e.g., the processor(s) 120) of FIG. 1 to configure provide an interface and control the welding-type power supply 102 of FIG. 1. The example instructions 800 are discussed below with reference to the control circuitry 112 configuring a GMAW welding operation.

At block 802, the control circuitry 112 displays a user interface (e.g., the user interfaces 200-600 of FIGS. 2-6) including inputs for physical characteristics of a welding-type operation. For example, the control circuitry 112 may display the user interfaces 200-600 in a sequence as the operator selects or otherwise inputs the physical characteristics, or may receive the physical characteristics in another manner.

At block 804, the control circuitry 112 determines whether the inputs for the physical characteristics have been received. For example, the control circuitry 112 may determine whether any physical characteristics remain to be input, or if a required set of physical characteristics has been received based on the input physical characteristics. If the physical characteristics have not been fully received (block 804), control returns to block 802.

When the physical characteristics have been received (block 804), at block 806 the control circuitry 112 displays a user interface (e.g., the user interface 700) including inputs for qualitative characteristics and graphic representations of an arc. For example, the control circuitry 112 may display the selectors 702, 704 based on the selected welding process (e.g., heat input and arc width for GMAW welding) and the representation 706 based on the selected joint type and joint position (e.g., T joint in flat position).

At block 808, the control circuitry 112 determines whether an input has been received for a first qualitative characteristic. For example, the control circuitry 112 may determine whether the operator has manipulated the selector 702 to adjust the heat input characteristic. If an input has been received for a first qualitative characteristic (block 808), at block 810 the control circuitry 112 synergically modifies a first subset of modifiable welding-type parameters based on the input for the first qualitative characteristic. For example, the control circuitry 112 may increase or decrease the voltage and wire feed speed based on increases or decreases to the heat input characteristic. The modifications are based on both the physical characteristics and a synergic relationship between the voltage and wire feed speed with respect to heat input.

If an input for the first qualitative characteristic has not been received (block 808), at block 812 the control circuitry 112 determines whether an input has been received for a second qualitative characteristic. For example, the control circuitry 112 may determine whether the operator has manipulated the selector 704 to adjust the arc width characteristic. If an input has been received for the second first qualitative characteristic (block 812), at block 814 the control circuitry 112 synergically modifies a second subset of modifiable welding-type parameters based on the input for the second qualitative characteristic. For example, the control circuitry 112 may increase or decrease the voltage and inductance based on increases or decreases to the arc width characteristic. The modifications are based on both the physical characteristics and a synergic relationship between the voltage and inductance with respect to arc width.

After modifying the first subset (block 810) or the second subset (block 814), at block 816 the control circuitry 112 updates and displays the graphic representation 706 of the arc via the user interface 700. For example, the control circuitry 112 may determine modifications to one or more of the welding arc length 712, the welding arc width 714 (or bead width), the bead leg length 716, the penetration profile 718 (e.g., penetration depth 720, penetration shape), the bead concavity 722, the electrode extension 724, and/or the throat thickness 726 based on the changes to the selectors 702, 704 and/or the corresponding subsets of welding parameters. Control then returns to block 808 for further adjustments to the qualitative characteristics.

If an input for the second qualitative characteristic has also not been received (block 812), at block 818 the control circuitry 112 determines whether a welding-type operation is occurring. For example, the control circuitry 112 may determine whether the operator has depressed a trigger or other input device to initiate a welding operation and/or sustain a welding operation. If a welding-type operation is occurring (block 818), at block 820 the control circuitry 112 controls the power conversion circuitry 110 (and wire feeder) based on the welding-type parameters configured using the user interface 700. Control then returns to block 818.

When the welding-type operation is no longer occurring (block 818), control returns to block 806 to display the user interface 700 for further configuration of welding-type parameters.

The present methods and systems may be realized in hardware, software, and/or a combination of hardware and software. A typical combination of hardware and software may include one or more application specific integrated circuits and/or chips. Some implementations may comprise a non-transitory machine-readable (e.g., computer readable) medium (e.g., FLASH memory, optical disk, magnetic storage disk, or the like) having stored thereon one or more lines of code executable by a machine, thereby causing the machine to perform processes as described herein. As used herein, the term "non-transitory machine-readable medium" is defined to include all types of machine readable storage media and to exclude propagating signals.

As utilized herein the terms "circuits" and "circuitry" refer to physical electronic components (i.e. hardware) and any software and/or firmware ("code") which may configure the hardware, be executed by the hardware, and or otherwise be associated with the hardware. As used herein, for example, a particular processor and memory may comprise a first "circuit" when executing a first one or more lines of code and may comprise a second "circuit" when executing a second one or more lines of code. As utilized herein, "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z". As utilized herein, the term "exemplary" means serving as a non-limiting example, instance, or illustration. As utilized herein, the terms "e.g.," and "for example" set off lists of one or more non-limiting examples, instances, or illustrations. As utilized herein, circuitry is "operable" to perform a function whenever the circuitry comprises the necessary hardware and code (if any is necessary) to perform the function, regardless of whether performance of the function is disabled or not enabled (e.g., by a user-configurable setting, factory trim, etc.).

While the present method and/or system has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. For example, block and/or components of disclosed examples may be combined, divided, re-arranged, and/or otherwise modified. Therefore, the present method and/or system are not limited to the particular implementations disclosed. Instead, the present method and/or system will include all implementations falling within the scope of the appended claims, both literally and under the doctrine of equivalents.

Certain embodiments of the invention are described in the following clauses:
Clause 1. A welding-type power supply, comprising:
   power conversion circuitry configured to convert input power to welding-type output power;
   a user interface comprising one or more input devices; and
   control circuitry configured to:
      receive an input via the user interface, the input representing a value of a qualitative characteristic of a welding arc;
      based on the value of the qualitative characteristic, determine a plurality of welding parameters;
      display a representation of the welding arc via the user interface, the representation based on the value of the qualitative characteristic; and
      control the power conversion circuitry based on the plurality of welding parameters.
Clause 2. The welding-type power supply as defined in claim 1, wherein the qualitative characteristic is at least one of a heat input of the welding arc, a width of the welding arc, a leg length of a resulting bead, a penetration profile, or a resulting bead shape.
Clause 3. The welding-type power supply as defined in claim 2, wherein the control circuitry is configured to receive inputs representing values for both the heat input and the width via the user interface, and determine the plurality of welding parameters based on the received inputs representing the values of the heat input and the width.
Clause 4. The welding-type power supply as defined in claim 1, wherein the plurality of welding parameters comprise two or more of: voltage, current, wire feed speed, inductance, slope, AC balance, AC frequency, pulse frequency, pulse background voltage, pulse background current, pulse peak voltage, or pulse peak current.
Clause 5. The welding-type power supply as defined in claim 1, wherein the control circuitry is configured to receive inputs representative of physical characteristics of a welding operation, and determine the plurality of welding parameters based on the inputs representative of the physical characteristics.
Clause 6. The welding-type power supply as defined in claim 5, wherein the physical characteristics comprise one or more of a weld process type, a wire type, a shielding gas type, a wire size, a workpiece thickness, a weld joint type, or a weld joint position.
Clause 7. The welding-type power supply as defined in claim 1, wherein the representation of the welding arc is a graphic illustrating one or more of: an arc length, a bead concavity, a bead width, a throat thickness, a leg height, a penetration depth, or an electrode extension.
Clause 8. The welding-type power supply as defined in claim 1, wherein the control circuitry is configured to update the representation of the welding arc in real time in response to changes in the value of the qualitative characteristic.
Clause 9. The welding-type power supply as defined in claim 8, wherein the control circuitry is configured to determine the welding parameters in response to a confirmation of the value of the qualitative characteristic via the user interface.
Clause 10. The welding-type power supply as defined in claim 8, wherein the control circuitry is configured to display the determined welding parameters via the user interface with the representation of the welding arc, and update the welding parameters in real time in response to the changes in the value of the qualitative characteristic via the user interface.
Clause 11. A welding-type user interface, comprising:
   one or more input devices;
   one or more output devices; and
   control circuitry configured to:
      receive an input via the one or more input devices, the input representing a value of a qualitative characteristic of a welding arc;
      based on the value of the qualitative characteristic, determine a plurality of welding parameters;
      display a representation of the welding arc via the one or more output devices, the representation based on the value of the qualitative characteristic; and
      communicate the plurality of welding parameters to a welding-type power supply.
Clause 12. A welding-type power supply, comprising:
   power conversion circuitry configured to convert input power to welding-type output power;
   a user interface comprising one or more input devices; and
   control circuitry configured to:
      in response to receiving a first input modifying a first characteristic via the user interface, synergically modify a first subset of a plurality of welding-type parameters;
      in response to receiving a second input modifying a second characteristic via the user interface, synergically modify a second subset of the plurality of welding-type parameters;
      display a representation of a welding arc via the user interface, the representation based on the values of the first characteristic and the second characteristic or based on values of the plurality of welding-type parameters; and
      control the power conversion circuitry based on the plurality of welding parameters.
Clause 13. The welding-type power supply as defined in claim 12, wherein the first characteristic comprises a first one of a heat input of the welding arc, a width of the welding arc, a leg length of a resulting bead, a penetration profile, or a resulting bead shape.
Clause 14. The welding-type power supply as defined in claim 13, wherein the second characteristic comprises a second one of the heat input of the welding arc, the width of the welding arc, the leg length of a resulting bead, the penetration profile, or the resulting bead shape.
Clause 15. The welding-type power supply as defined in claim 12, wherein the first subset of the plurality of welding-type parameters comprises two or more of: voltage, current, wire feed speed, inductance, slope, AC balance, AC frequency, pulse frequency, pulse background voltage, pulse background current, pulse peak voltage, or pulse peak current.
Clause 16. The welding-type power supply as defined in claim 15, wherein the second subset of the plurality of welding-type parameters comprises two or more of: voltage, current, wire feed speed, inductance, slope, AC balance, AC frequency, pulse frequency, pulse background voltage, pulse background current, pulse peak voltage, or pulse peak current, wherein the second subset has at least one welding-type parameter that is different than the first subset.
Clause 17. The welding-type power supply as defined in claim 16, wherein the first subset and the second subset have at least one overlapping welding-type parameter.
Clause 18. The welding-type power supply as defined in claim 12, wherein the control circuitry is configured to receive inputs representative of physical characteristics of a welding operation, and modify the first subset of the plurality of welding-type parameters based on the inputs representative of the physical characteristics.
Clause 19. The welding-type power supply as defined in claim 18, wherein the physical characteristics comprise one or more of a weld process type, a wire type, a shielding gas type, a wire size, a workpiece thickness, a weld joint type, or a weld joint position.
Clause 20. The welding-type power supply as defined in claim 12, wherein the representation of the welding arc is a graphic illustrating one or more of: an arc length, a bead concavity, a bead width, a throat thickness, a leg height, a penetration depth, or an electrode extension.
Clause 21. The welding-type power supply as defined in claim 12, wherein the control circuitry is configured to synergically modify the first subset of the plurality of welding-type parameters by modifying the first subset of the plurality of welding-type parameters based on a predetermined relationship between the welding-type parameters in the first subset and based on a value of the first characteristic.

## Claims

1. A welding-type power supply, comprising:
power conversion circuitry configured to convert input power to welding-type output power;
a user interface comprising one or more input devices; and
control circuitry configured to:
receive an input via the user interface, the input representing a value of a qualitative characteristic of a welding arc;
based on the value of the qualitative characteristic, determine a plurality of welding parameters;
display a representation of the welding arc via the user interface, the representation based on the value of the qualitative characteristic; and
control the power conversion circuitry based on the plurality of welding parameters.

2. The welding-type power supply as defined in claim 1, wherein the qualitative characteristic is at least one of a heat input of the welding arc, a width of the welding arc, a leg length of a resulting bead, a penetration profile, or a resulting bead shape.

3. The welding-type power supply as defined in claim 2, wherein the control circuitry is configured to receive inputs representing values for both the heat input and the width via the user interface, and determine the plurality of welding parameters based on the received inputs representing the values of the heat input and the width.

4. The welding-type power supply as defined in claim 1, wherein the plurality of welding parameters comprise two or more of: voltage, current, wire feed speed, inductance, slope, AC balance, AC frequency, pulse frequency, pulse background voltage, pulse background current, pulse peak voltage, or pulse peak current.

5. The welding-type power supply as defined in claim 1, wherein the control circuitry is configured to receive inputs representative of physical characteristics of a welding operation, and determine the plurality of welding parameters based on the inputs representative of the physical characteristics, and optionally
wherein the physical characteristics comprise one or more of a weld process type, a wire type, a shielding gas type, a wire size, a workpiece thickness, a weld joint type, or a weld joint position.

6. The welding-type power supply as defined in claim 1, wherein the representation of the welding arc is a graphic illustrating one or more of: an arc length, a bead concavity, a bead width, a throat thickness, a leg height, a penetration depth, or an electrode extension.

7. The welding-type power supply as defined in claim 1, wherein the control circuitry is configured to update the representation of the welding arc in real time in response to changes in the value of the qualitative characteristic.

8. The welding-type power supply as defined in claim 7, wherein the control circuitry is configured to determine the welding parameters in response to a confirmation of the value of the qualitative characteristic via the user interface, or
wherein the control circuitry is configured to display the determined welding parameters via the user interface with the representation of the welding arc, and update the welding parameters in real time in response to the changes in the value of the qualitative characteristic via the user interface.

9. A welding-type user interface, comprising:
one or more input devices;
one or more output devices; and
control circuitry configured to:
receive an input via the one or more input devices, the input representing a value of a qualitative characteristic of a welding arc;
based on the value of the qualitative characteristic, determine a plurality of welding parameters;
display a representation of the welding arc via the one or more output devices, the representation based on the value of the qualitative characteristic; and
communicate the plurality of welding parameters to a welding-type power supply.

10. A welding-type power supply, comprising:
power conversion circuitry configured to convert input power to welding-type output power;
a user interface comprising one or more input devices; and
control circuitry configured to:
in response to receiving a first input modifying a first characteristic via the user interface, synergically modify a first subset of a plurality of welding-type parameters;
in response to receiving a second input modifying a second characteristic via the user interface, synergically modify a second subset of the plurality of welding-type parameters;
display a representation of a welding arc via the user interface, the representation based on the values of the first characteristic and the second characteristic or based on values of the plurality of welding-type parameters; and
control the power conversion circuitry based on the plurality of welding parameters.

11. The welding-type power supply as defined in claim 10, wherein the first characteristic comprises a first one of a heat input of the welding arc, a width of the welding arc, a leg length of a resulting bead, a penetration profile, or a resulting bead shape, and optionally
wherein the second characteristic comprises a second one of the heat input of the welding arc, the width of the welding arc, the leg length of a resulting bead, the penetration profile, or the resulting bead shape.

12. The welding-type power supply as defined in claim 10, wherein the first subset of the plurality of welding-type parameters comprises two or more of: voltage, current, wire feed speed, inductance, slope, AC balance, AC frequency, pulse frequency, pulse background voltage, pulse background current, pulse peak voltage, or pulse peak current.

13. The welding-type power supply as defined in claim 12, wherein the second subset of the plurality of welding-type parameters comprises two or more of: voltage, current, wire feed speed, inductance, slope, AC balance, AC frequency, pulse frequency, pulse background voltage, pulse background current, pulse peak voltage, or pulse peak current, wherein the second subset has at least one welding-type parameter that is different than the first subset, and optionally
wherein the first subset and the second subset have at least one overlapping welding-type parameter.

14. The welding-type power supply as defined in claim 10, wherein the control circuitry is configured to receive inputs representative of physical characteristics of a welding operation, and modify the first subset of the plurality of welding-type parameters based on the inputs representative of the physical characteristics, and optionally
wherein the physical characteristics comprise one or more of a weld process type, a wire type, a shielding gas type, a wire size, a workpiece thickness, a weld joint type, or a weld joint position.

15. The welding-type power supply as defined in claim 10, wherein the control circuitry is configured to synergically modify the first subset of the plurality of welding-type parameters by modifying the first subset of the plurality of welding-type parameters based on a predetermined relationship between the welding-type parameters in the first subset and based on a value of the first characteristic.
